**Europäisches Patentamt**

**European Patent Office**

**Office européen des brevets**

(11) Veröffentlichungsnummer : **0 379 121 B1**

(12) **EUROPÄISCHE PATENTSCHRIFT**

(45) Veröffentlichungstag der Patentschrift :
**01.04.92 Patentblatt 92/14**

(21) Anmeldenummer : **90100752.6**

(22) Anmeldetag : **15.01.90**

(51) Int. Cl.⁵ : **B09B 5/00,** C12S 9/00

(54) **Verfahren und Anlage zur Dekontaminierung von Schadstoffe enthaltendem Erdreich, Schlämmen, Bauschutt oder dergleichen.**

(30) Priorität : **16.01.89 DE 3901100**

(43) Veröffentlichungstag der Anmeldung :
**25.07.90 Patentblatt 90/30**

(45) Bekanntmachung des Hinweises auf die
Patenterteilung :
**01.04.92 Patentblatt 92/14**

(84) Benannte Vertragsstaaten :
**AT BE CH DE DK ES FR GB GR IT LI LU NL SE**

(56) Entgegenhaltungen :
**DE-A- 3 703 824**
**DE-A- 3 720 833**
**GB-A- 2 014 555**
**NL-A- 8 602 985**

(73) Patentinhaber : **SANTEC GMBH**
**Hanielweg 13-15**
**W-1000 Berlin 48 (DE)**

(72) Erfinder : **Hundenborn, Bernd**
**Wünsdorferstrasse 95**
**W-1000 Berlin 49 (DE)**

(74) Vertreter : **Patentanwälte Leinweber &**
**Zimmermann**
**Rosental 7/II Aufg.**
**W-8000 München 2 (DE)**

## Beschreibung

Die Erfindung bezieht sich auf ein Verfahren zur Dekontaminierung von Schadstoffe enthaltendem Erdreich, Schlämmen, Bauschutt oder dgl. mit Hilfe von Mikroorganismen, die dem zu reinigenden Material durch Beviesehung zugemführt werden.

Bei bekannten Verfahren dieser Art werden die zu dekontaminierenden Materialien nicht in situ, sondern nach deren Überführung zu der Reinigungsanlage in sog. Mieten oder auf einer ausgedehnten Bodenfläche ausgebreitet und mit der die Mikroorganismen enthaltenden Biomasse besprüht. Bei diesen sog. Freifeld- oder Land-farming-Verfahren haben sich einmal insofern Probleme ergeben, als die kontaminierten Materialien nicht sehr hoch aufgeschüttet werden dürfen sondern vielmehr auf einer großen Fläche ausgebreitet werden müssen, so daß stets die Gefahr einer hohen Emissionsbelastung der Luft aufgrund von Ausgasungen der Schadstoffe sowie von Abscheidungen von Stoffwechselprodukten der Mikroorganismen besteht. Auch bei Abdeckung der Flächen mit Überbauungen hat sich gezeigt, daß erhebliche Emissionen unvermeidbar sind, da aus den sog. Beeten oder Mieten beim Umpflügen bzw. Durchmischen ein erheblicher Schadstoffaustrag erfolgt. Zum anderen hat sich die Notwendigkeit umfangreicher Sicherungsmaßnahmen im Bodenbereich erwiesen, damit z. B. bei Regen die Schadstoffracht nicht ausgetragen und dadurch zu einer anderen Stelle verlagert wird.

Der Erfindung liegt die Aufgabe zugrunde, das Verfahren der eingangs genannte Art so weiterzuentwickeln, daß bei mikrobiologischer Aufbereitung erstens ein schnellerer Abbau der Schadstoffe gegeben ist und zweitens keine Emissionsbelastung entstehen kann.

Das Verfahren nach der Erfindung, bei dem diese Aufgabe gelöst ist, ist im wesentlichen dadurch gekennzeichnet, daß die zu reinigenden Materialien in einen schließbaren Silobehälter eingeführt und mittels einer Umwälzvorrichtung zumindest in zeitlichen Intervallen einer Durchmischungsbewegung unterworfen werden, wobei die Bevieselung unit den Mikroorganismen im Silobehälter erfolgt. Als sehr vorteilhaft hat es sich erwiesen, wenn die Durchmischungsbewegung unter Zufuhr von Sauerstoff bzw. Luft erfolgt.

Mit diesem Verfahren lassen sich Verunreinigungen organischer und anorganischer Art wirksam bekämpfen, ganz allgemein alle üblichen, verbreitetn Kohlenwasserstoffe, einschließlich aliphatischer Kohlenwasserstoffe und auch Phenole.

Das Verunreinigungen dieser Art enthaltende Erdreich, die Schlämme, der Bauschutt oder dgl. lassen sich aufgrund der zwangsweisen Durchmischung mit der Biomasse sowie der steuerbaren Sauerstoff- bzw. Luftzufuhr intensiv, d. h. in einer wesentlich kürzeren Zeitspanne dekontaminieren. Da diese Behandlung in abschließbaren, als Bioreaktoren dienenden Silobehältern stattfindet, sind Emissionsbelastungen ausgeschaltet. Es wird vielmehr erreicht, daß aufgrund der Bewegung und der Luftzufuhr leichtflüchtige Bestandteile, wie z. B. chlorierte Kohlenwasserstoffe oder Phenole, einem Strip-Effekt unterworfen werden, so daß sich eine beschleunigte Abscheidung der Schadstoffe ergibt.

An dieser Stelle ist zu erwähnen, daß es bereits bekannt ist (DE-OS 37 03 824), sich bei einem Verfahren zur simultanen chemischen und biologischen Beseitigung von organischen Abfällen in Form von Abwässern eines Schlaufenreaktors zu bedienen, der in einem relativ hohen Zylinder ein zentrisches, beidseitig offenes, an seinem oberen Ende eine Erweiterung aufweisendes Leitrohr umfaßt, in dessen unterem Bereich eine zentrische Düse angeordnet ist. An dieser Düse münden ein Luft- bzw. Luft-Sauerstoff-Gemisch-Zufuhrrohr, ein Oxydationsmittel-Zufuhrrohr und ein Rohr für die Kreislaufflüssigkeit, die aus dem oberen oder mittleren Bereich des Leitrohrinneren abgesaugt und über eine Rückführpumpe der Düse wieder zugeleitet wird. Durch eine relativ verwickelte spezielle Formgebung der Düse soll eine intensive Sauerstoffversorgung des Reaktors bei einer minimalen mechanischen Belastung (z. B. durch auftretende Scherkräfte) der Mikroorganismen erreicht werden. Mit Hilfe dieses bekannten Schlaufenreaktors lassen sich lediglich flüssige Medien behandeln, nicht jedoch Schadstoffe enthaltendes Erdreich, Schlämme, Bauschutt oder dergleichen, d. h. Materialien, die die Gefahr der Düsenverstopfung herbeiführende feste Bestandteile enthalten.

In weiterer vorteilhafter Ausgestaltung des erfindungs-gemäßen Verfahrens hat es sich als günstig erwiesen, wenn aus den Materialien nach deren mikrobieller Aufbereitung und vor ihrer Ableitung aus dem Silobehälter die Biomasse ausgespült wird. Bei Rückführung der dekontaminierten Materialien zu den Entnahmestellen bildet die Biomasse somit keine irgendwie gefährliche Umweltbelastung mehr. Die Biomasse läßt sich vielmehr für eine erneute Dekontaminierung aus dem Abscheider in den Bioreaktor zurückführen. Da die Biomasse mit dem Wasser in den Kreislauf zurückgeleitet wird, ergibt sich in vorteilhafter Weise auch eine Rückgewinnung der noch unverbrauchten Nährstoffe bzw. Nährsalze, und letztere können nicht in den Erdboden eindringen und das Grundwasser beeinträchtigen.

Als sehr günstig im Hinblick auf eine schnelle, effektive Durchmischung hat es sich herausgestellt, wenn die der Durchmischung der Materialien dienende Umwälzbewegung mit Hilfe von Druckluft oder Hydraulik vorgenommen wird.

2

Die Erfindung richtet sich weiterhin auf eine Anlage zur Durchführung des Verfahrens, die sich im wesentlichen dadurch auszeichnet, daß mindestens ein als Bioreaktor dienender Silobehälter für die Aufnahme und Durchmischung der zu reinigenden Materialien vorgesehen ist, der eine Umwälzvorrichtung sowie Öffnung für die Zufuhr bzw. Ableitung der Materialien und an seiner Oberseite eine gesonderte Vorrichtung zur Einleitung der Biomasse umfaßt. Die dadurch mögliche kontinuierliche Bewegung des kontaminierten Materials führt zu einer erhöhten Abbaurate der Schadstoffe, offenbar bedingt durch eine so erreichbare besonders intensive Homogenisierung. Zweckmäßigerweise ist der Silobehälter dabei an mindestens eine Sauerstofzufuhrleitung angeschlossen. Durch die Bewegung der verunreinigten Materialien läßt sich eine kontinuierliche Infiltration mit Mikroorganismen erreichen. Statt diese Einleitvorrichtung über eine ein Steuerventil enthaltende Rohrleitung mit einer mikrobiellen Anzuchtanlage zu verbinden, kann sie auch mit einer Wasserzufuhrleitung verbindbar sein, über die dem Behälterinhalt das Reinigungs- bzw. Spülwasser zugeleitet wird.

Zu erwähnen ist in diesem Zusammenhang auch der dennoch vergleichsweise geringe Platzbedard. Aufgrund der Kompaktheit jedes Silobehälters ergibt sich ferner als wesentlicher Vorteil dessen Einsatzmöglichkeit unmittelbar am jeweiligen Schadensort, da die Behälter zusammen mit den anderen Anlageteilen jeweils als transportable Baueinheiten ausgeführt werden können.

Als im Hinblick auf die schnelle Durchführung der Dekontamination sehr vorteilhaft hat es sich erwiesen, wenn jeder Silobehälter eine der Materialzufuhr dienende Aufgabeöffnung und eine der Materialableitung dienende Entleerungsöffnung aufweist.

In gleicher Richtung zielt das in weiterer Ausgestaltung vorgesehene Merkmal, wonach an jeden Silobehälter eine die abgesaugte Abluft zu einer Abluftfiltriervorrichtung führende Abluftleitung angeschlossen ist. Auf diese einfache Weise wird sicher der freie Austritt der leicht flüchtigen Substanzen, die zu Emissionsbelastungen führen können, verhindert.

Um eine zufriedenstellende Bewegung der Materialien im Silobehälter zu erreichen, können bekannte angetriebene Fördervorrichtungen, wie Lamellenbandförderer, vorgesehen sein, oder es kann eine Umwälzung mit Hilfe von Druckluft oder Hydraulik oder dgl. vorgenommen werden. Als besonders effektiv hat sich jedoch eine Anlage erwiesen, bei der die im Silobehälter vorgesehene Umwälzvorrichtung ein im etwa zylindrischen stehenden Silobehälter konzentrisch und im Abstand vom Boden angeordnetes Förderrohr umfaßt, in dessen Innerem eine angetriebene Hubschnecke drehbar gelagert ist. Dabei ist die Vorrichtung zur Einleitung der Biomasse zweckmäßigerweise in Form einer oberhalb des die Hubschnecke enthaltenden Förderrohrs ausgebildeten Berieselungsvorrichtung ausgebildet.

Die Erfindung richtet sich nicht nur auf eine Anlage der vorstehend gekennzeichneten ersten Bauart mit einer Umwälzvorrichtung in Form eines im Silobehälter konzentrisch und im Abstand vom Boden angeordneten Förderrohrs. Alternativ kann nämlich gemäß einer abgewandelten Ausführungsform auf das aufwendige Förderrohr im Inneren des Silobehälters mitsamt der angetriebenen Hubschnecke verzichtet werden, wenn die der Durchmischung der Materialien dienende Umwälzbewegung mit Hilfe von Druckluft oder Hydraulik vorgenommen wird, und zwar ist es dabei von besonderem Vorteil, wenn an die zentral an tiefster Stelle gelegene Entnahmeöffnung eine Umwälzpumpe angeschlossen ist, die über eine die Materialien zum oberen Bereich des Silos zurückführende Umwälzleitung mit der Einführungsöffnung des Silobehälters in Verbindung steht. Eine derartige Anlage ermöglicht eine besonders leicht kontrollierbare Umwälzung und Aufbereitung der Materialien; das Gut wird nämlich an einer vorbestimmten Stelle dem Bioreaktor entnommen, an seiner Außenseite entlang transportiert und schließlich wieder an einer bestimmten höher gelegenen Stelle in den Silobehälter eingeleitet, so daß sich eine ganz genau vorherbestimmbare Reaktion abspielt.

Als Umwälzpumpen können Kreisel-, Kolben-, Membran-, Zahnrad- oder Schraubspindelpumpen zum Einsatz gelangen. Besonders zweckmäßig ist es jedoch, wenn die Umwälzpumpe durch eine Exzenterschneckenpumpe gebildet ist, deren Wellenachse quer zur Siloachse ausgerichtet ist. Eine derartige Pumpe läßt sich einerseits besonders platzsparend an der Entnahmeöffnung des Silobehälters anordnen, zum anderen sorgt sie aufgrund ihrer hohen Förderleistung für eine besonders wirkungsvolle Ableitung des ihr aus der Entnahmeöffnung zufließenden Gutes quer zur Silobehälterachse.

Vorteilhafterweise ist in weiterer Ausgestaltung in die an der Außenwand des Silos entlanggeführte Umwälzleitung ein Dreiwegeschieber eingeschaltet. Dieser ermöglicht es, anstelle einer Rückführung der dem Behälter entzogenen Materialien letztere, sobald sie den gewünschten Reinigungsgrad erreicht haben, weiterzufördern, oder aber sie einem nachgeordneten Silobehälter zuzuleiten, in dem die Materialien einer Weiter- bzw. Nachbehandlung unterworfen werden.

Weitere Einzelheiten, Vorteile und Merkmale der Erfindung ergeben sich aus der folgenden Beschreibung und der Zeichnung, auf die bezüglich aller nicht im Text beschriebenen Einzelheiten ausdrücklich verwiesen wird. Es zeigen:

Fig. 1 eine Seitenansicht der bei Durchführung des erfindungsgemäßen Verfahrens zum Einsatz gelangenden Anlage gemäß einer ersten Ausführung,

Fig. 2 eine Draufsicht auf die Anlage nach Fig. 1, und

Fig. 3 eine Seitenansicht einer Anlage gemäß einer abgewandelten Ausführung.

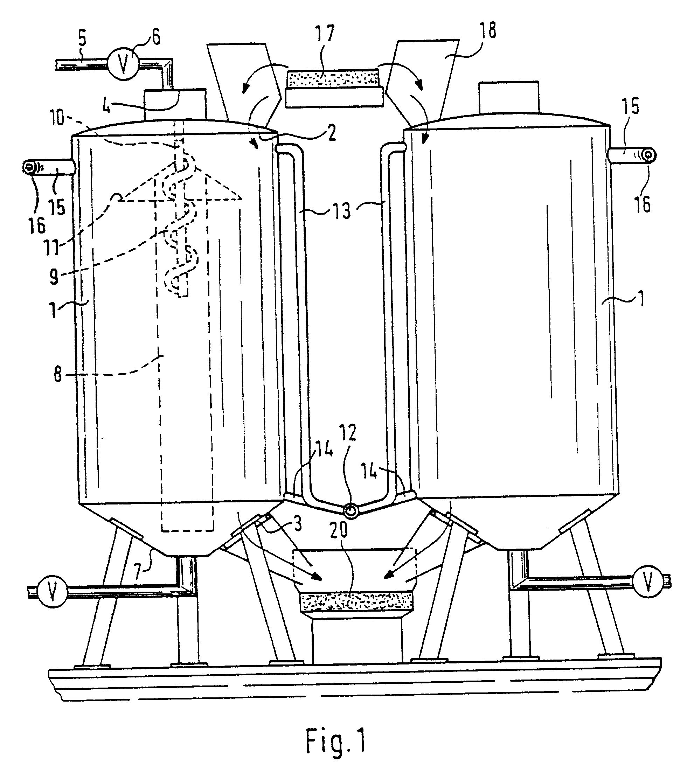

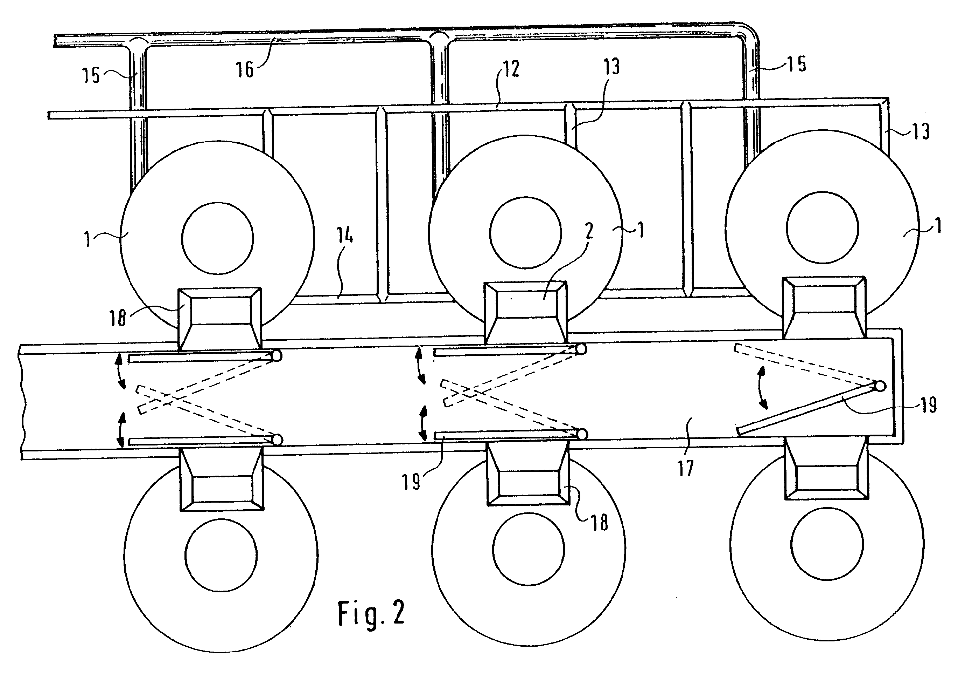

Wie aus Fig. 1 ersichtlich, umfaßt die veranschaulichte Anlage zur Dekontaminierung von Schadstoffe enthaltenden Materialien, wie z. B. von mit Kohlenwasserstoffen durchsetztem Erdreich, Schlämmen, Bauschutt oder dgl., mit Hilfe von Mikroorganismen mehrere als Bioreaktoren dienende Silobehälter 1 mit einem Fassungsvermögen von ca. 30 m³. Jeder Silobehälter 1 ist mit einer der Materialzufuhr dienenden Aufgabeöffnung 2 und einer der Ableitung der gereinigten Materialien dienenden Entleerungsöffnung 3 versehen. Jede dieser Öffnungen ist auf nicht näher veranschaulichte Weise verschließbar. An ihrer Oberseite weisen die Silobehälter 1 jeweils eine gesonderte Vorrichtung 4 zur Einleitung der die Mikroorganismen enthaltenden Biomasse auf. Diese in Fig. 1 nur schematisch angedeutete Vorrichtung 4, die über eine Rohrleitung 5 mit eingeschaltetem Ventil 6 an eine nicht gezeigte, an sich bekannte mikrobielle Anzuchtanlage angeschlossen ist, umfaßt Düsen, über die eine Berieselung der im Silobehälter 1 befindlichen Materialien ermöglicht wird. Um eine schnelle Durchmischung des Behälterinhalts zu erzielen, ist jeder Silobehälter 1 mit einer Umwälzvorrichtung in Form eines im etwa zylindrischen stehenden Silobehälter konzentrisch und im Abstand von seinem Boden 7 angeordneten Förderrohrs 8 versehen, in dessen Innerem eine Hubschnecke 9 drehbar gelagert ist, die mit einem nicht gezeigten Antriebsmotor in Verbindung steht. Die Hubschnecke 9 mit ihrer Achse 10 ist in Fig. 1 abgeschnitten angedeutet. Sie erstreckt sich in Wirklichkeit durch das Förderrohr 8 hindurch nach unten bis in den Bereich des Bodens 7, um die dort befindlichen Materialien zu erfassen, nach oben zu fördern und über dem Förderrohr zugeordnete Leitflächen 11 wieder an den Raum außerhalb des Förderrohrs 8 abzugeben. Für die Zufuhr von Sauerstoff oder Luft ist allen Silobehältern 1 eine gemeinsame Zuluftleitung 12 zugeordnet, die über nicht näher veranschaulichte steuerbare Ventile in Abzweigungen 13 bzw. 14 zum oberen und zum unteren Bereich der Silobehälter 1 führt. Zusätzlich können auch weiter Abzweigungen mit Mündungen im mittleren Bereich der Silobehälter 1 vorgesehen sein. Anstelle der in Fig. 1 gezeigten Anordnung der Zuluftleitung 12 zwischen den beiden Reihen von Silobehältern 1 kann diese Zuluftleitung 12 auch, wie in Fig. 2 angedeutet, außerhalb der Reihen verlaufen. Auch in diesem Fall mündet die Zuluftleitung 12 über Abzweigungen 13 im oberen Bereich jedes Silobehälters 1 und über Abzweigungen 14 im unteren Silobehälterbereich. An jeden Silobehälter 1 ist ferner über eine Zweigleitung 15 eine Abluftleitung 16 angeschlossen. Die über diese Abluftleitung 16 abgesaugte Abluft läßt sich mittels einer nicht näher veranschaulichten Abluftfiltriervorrichtung auf an sich bekannte Weise dekontaminieren, bevor sie an die Umwelt abgegeben wird.

Den verschiedenen - im veranschaulichten Beispiel 6 - Silobehältern 1 ist ein ihnen gemeinsames Förderband 17 zugeordnet. Statt dessen können auch Kratzkettenförderer Anwendung finden. Über diese Förderorgane werden die zu reinigenden Materialien den Aufgabeöffnungen 2 zugeleitet. Zu diesem Zweck ist jede Aufgabeöffnung 2 mit einem Aufgabetrichter 18 ausgerüstet. Außerdem sind im Bereich der Aufgabeöffnung 2 oberhalb des Förderbandes 17, wie besonders deutlich der Fig. 2 entnehmbar, schwenkbare Leitwände 19 vorgesehen. In Abhängigkeit von ihrer jeweiligen Schwenkposition führen diese Leitwände 19 die zu reinigenden Materialien vom Förderband 17 weg der der Leitwand 19 jeweils zugeordneten Aufgabeöffnung 2 zu.

Außerdem ist in den verschiedenen Silobehältern 1 ein ihnen gemeinsames Förderband 20 vorgesehen, dem die gereinigten Materialien von den Entleerungsöffnungen 3 zugeleitet werden, um mit Hilfe dieses Förderbandes 20 abgeführt zu werden. Während sich das Förderband 17 etwa in Höhe der Aufgabetrichter 18 befindet, ist das Förderband 20 unterhalb der Entleerungsöffnungen 3 angeordnet.

In der veranschaulichten Anlage mit mehreren als Bioreaktoren dienenden Silobehältern 1, die sich hintereinander oder parallel schalten lassen, ist die Möglichkeit gegeben, verschiedene Schadstoffe gleichzeitig abzubauen. Über nicht gezeigte zusätzliche Förderbänder lassen sich nämlich die in einem Silobehälter 1 vorbehandelten Materialien einem weiteren Silobehälter zur Weiterbehandlung bzw. Nachbehandlung zuführen.

Eine Beschleunigung des Abbaus der Schadstoffe läßt sich durch Temperierung der Silobehälter 1 erreichen. Zu diesem Zweck sind die Silobehälter 1 auf nicht näher gezeigte herkömmliche Weise mit einer Wärmeisolierung versehen.

Auf nicht näher veranschaulichte Weise sind die Silobehälter 1 mit Meßfühlern für die einzelnen in der Praxis zu berücksichtigenden Parameter ausgerüstet. Über diese Sonden lassen sich z B. die Temperatur, der pH-Wert, der Sauerstoff-Partialdruck, die Konsistenz der zu reinigenden Materialien usw. feststellen und zu Regelungszwecken heranziehen, so daß sich ein vollautomatischer Betrieb der erläuterten Anlage erzielen läßt.

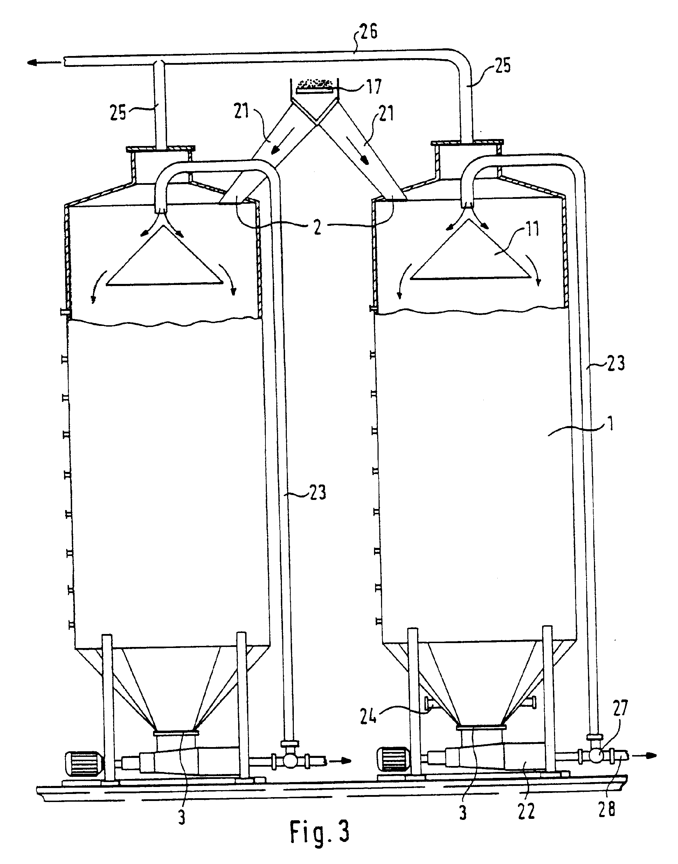

Wie aus Fig. 3 ersichtlich, umfaßt diese Anlage ebenfalls mehrere als Bioreaktoren dienende Silobehälter 1 mit einem Fassungsvermögen von beispielsweise 20 bis 50 m³. Jeder Silobehälter 1 ist mit einer der Materialzufuhr über eine Aufgaberutsche 21 dienenden Aufgabeöffnung 2 und einer der Ableitung der gereinigten Materialien dienenden verschließbaren Entnahmeöffnung 3 versehen. An ihrer Oberseite weisen die Silobehälter 1 jeweils ebenfalls eine in diesem Fall nicht näher veranschaulichte, gesonderte Vorrichtung zur Einleitung der die Mikroorganismen enthaltenden Biomasse auf.

Diese Vorrichtung ist an eine ebenfalls nicht gezeigte, an sich bekannte mikrobielle Anzuchtanlage angeschlossen. Sie umfaßt Düsen, die eine Berieselung der im Silobehälter 1 befindlichen Materialien ermöglichen. Um eine schnelle Durchmischung des Behälterinhalts zu erzielen, ist jeder Silobehälter 1 mit einer Umwälzpumpe 22 versehen, die an die zentral an der tiefsten Stelle des etwa zylindrischen stehenden Silobehälters 1 gelegene Entnahmeöffnung 3 angeschlossen ist. Diese Umwälzpumpe 22 steht über eine Umwälzleitung 23 mit der Aufgabeöffnung 2 des Silobehälters 1 in Verbindung, die die Rückführung der an der Behälterunterseite abgezogenen Materialien in das Behälterinnere ermöglicht. Dort gelangen die Materialien in den Bereich eines Verteilerkegels mit Leitflächen 11, auf denen sie gemäß den eingezeichneten Pfeilen nach allen Seiten hin abgeführt werden. Für die Zufuhr von Sauerstoff oder Luft ist allen Silobehältern 1 eine nicht näher gezeigte gemeinsame Zuluftleitung zugeordnet, die über steuerbare Ventile in Abzweigungen zum oberen und zum unteren Bereich der Silobehälter führt, beispielsweise zu Anschlüssen 24. Zusätzlich können noch weitere Abzweigungen mit Mündungen im mittleren Bereich der Silobehälter vorgesehen sein. An jeden Silobehälter 1 ist ferner über eine Zweigleitung 25 eine Absaugleitung 26 angeschlossen. Die über diese Absaugleitung 26 abgesaugte Abluft läßt sich mittels einer nicht näher veranschaulichten Abluftfiltriervorrichtung auf an sich bekannte Weise dekontaminieren, bevor sie an die Umwelt abgegeben wird.

Auch bei dieser Ausführung ist den verschiedenen Silobehältern 1 ein ihnen gemeinsames Förderband 17 oder ein Kratzkettenförderer zugeordnet, mit dessen Hilfe die zu reinigenden Materialien den zu den Aufgabeöffnungen 2 führenden Aufgaberutschen 21 zugeleitet werden.

Der Fig. 3 ist entnehmbar, daß in die Umwälzleitung 23, über die die Umwälzbewegung der Materialien auf hydraulischem Wege vorgenommen wird, ein Dreiwegeschieber 27 eingeschaltet ist. Dieser ermöglicht es, die gereinigten Materialien von den Entleerungsöffnungen 4 zu einer Abzweigleitung 28 abzuführen.

Auch bei dieser Anlage mit mehreren als Bioreaktoren dienenden Silobehältern 1, die sich hintereinander oder parallel schalten lassen, ist die Möglichkeit gegeben, verschiedene Schadstoffe gleichzeitig abzubauen. Über nicht gezeigte zusätzliche Rohrleitungen lassen sich nämlich die in einem Silobehälter 1 vorbehandelten Materialien einem weiteren Silobehälter zur Weiterbehandlung bzw. Nachbehandlung zuführen.

Durch Temperierung der Silobehälter 1 läßt sich auch hier eine Beschleunigung des Abbaus der Schadstoffe erreichen. Zu diesem Zweck sind die Silobehälter 1 auf nicht näher gezeigte herkömmliche Weise mit einer Wärmeisolierung versehen.

In diesem Beispiel können die Silobehälter 1 ebenfalls mit Meßfühlern für die einzelnen in der Praxis zu berücksichtigenden Parameter ausgerüstet sein. Über diese Sonden lassen sich z. B. die Temperatur, der pH-Wert, der Sauerstoff-Partialdruck, die Konsistenz der zu reinigenden Materialien usw. feststellen und zu Regelungszwecken heranziehen, so daß sich ein vollautomatischer Betrieb der erläuterten Anlage erzielen läßt.

## Patentansprüche

1. Verfahren zur Dekontaminierung von Schadstoffe enthaltendem Erdreich, Schlämmen, Bauschutt oder dgl. mit Hilfe von Mikroorganismen, die dem Zureinigenden Material durch Berieselung zugeführt werden, dadurch gekennzeichnet, daß die zu reinigenden Materialien in einen schließbaren Silobehälter eingeführt und mittels einer Umwälzvorrichtung zumindest in zeitlichen Intervallen einer vertikalen Durchmischungsbewegung unterworfen werden, wobei die Bevieselung mit den Mikroorganismen im Silobehälter erfolgt.

2. Verfahren nach Anspruch 1, dadurch gekennzeichnet, daß die Durchmischungsbewegung unter Zufuhr von Sauerstoff bzw. Luft erfolgt.

3. Verfahren nach Anspruch 1 oder 2, dadurch gekennzeichnet, daß aus den Materialien nach deren mikrobieller Aufbereitung und vor ihrer Ableitung aus dem Silobehälter (1) die Biomasse ausgespült wird.

4. Verfahren nach einem der Ansprüche 1 bis 3, dadurch gekennzeichnet, daß die der Durchmischung der Materialien dienende Umwälzbewegung mit Hilfe von Druckluft oder Hydraulik vorgenommen wird.

5. Anlage zur Durchführung des Verfahrens nach einem der Ansprüche 1 bis 4, dadurch gekennzeichnet, daß mindestens ein als Bioreaktor dienender Silobehälter (1) für die Aufnahme und Durchmischung der zu reinigenden Materialien vorgesehen ist, der eine Umwälzvorrichtung (8,9) sowie (2,3,4) für die Zufuhr bzw. Ableitung der Materialien und an seiner Oberseite eine gesonderte Vorrichtung (4) zur Einleitung der Biomasse umfaßt.

6. Anlage nach Anspruch 5, dadurch gekennzeichnet, daß der Silobehälter (1) an mindestens eine Sauerstoffzufuhrleitung (12,13,14) angeschlossen ist.

7. Anlage nach Anspruch 5 oder 6, dadurch gekennzeichnet, daß jeder Silobehälter (1) eine der Materialzufuhr dienende Aufgabeöffnung (2) und eine der Materialableitung dienende Entleerungsöffnung (3) aufweist.

8. Anlage nach einem der Ansprüche 5 bis 7, dadurch gekennzeichnet, daß an jeden Silobehälter (1) eine die abgesaugte Abluft zu einer Abluftfiltriervorrichtung führende Abluftleitung (5,6) angeschlossen ist.

9. Anlage nach einem der Ansprüche 5 bis 8, dadurch gekennzeichnet, daß die im Silobehälter (1) vergesehene Umwälzvorrichtung ein im etwa zylindrischen stehenden Silobehälter konzentrisch und im Abstand vom Boden angeordnetes Förderrohr (8) umfaßt, in dessen Innerem eine angetriebene Hubschnecke (9) drehbar gelagert ist.

10. Anlage nach den Ansprüchen 5 und 9, dadurch gekennzeichnet, daß die Vorrichtung (4) zur Einleitung der Biomasse in Form einer oberhalb des die Hubschnecke (9) enthaltenden Förderrohrs (8) ausgebildeten Berieselungsvorrichtung ausgebildet ist.

11. Anlage nach einem der Ansprüche 5 bis 10, dadurch gekennzeichnet, daß mehreren Silobehältern (1) ein die zu reinigenden Materialien den Aufgabeöffnungen (2) zuleitendes, ihnen gemeinsames Förderband (17) und/oder die gereinigten Materialien von den Entleerungsöffnungen (3) ableitendes, ihnen gemeinsames Förderband (20) vorgesehen ist.

12. Anlage nach Anspruch 11, dadurch gekennzeichnet, daß jeder Aufgabeöffnung (2) ein Aufgabetrichter (18) sowie oberhalb des Förderbandes (17) schwenkbare Leitwände (19) zugeordnet sind, mit deren Hilfe die zu reinigenden Materialien in Abhängigkeit von der jeweiligen Schwenkposition der Leitwände vom Förderband (17) weg in Richtung der der Leitwand zugeordneten Aufgabeöffnung (2) ableitbar sind.

13. Anlage nach einem der Ansprüche 5 bis 12, dadurch gekennzeichnet, daß mehreren Silobehältern (1) eine gemeinsame Zuluftleitung (12,13,14) zugeordnet ist, die über steuerbare Ventile zum oberen und/oder unteren Bereich, der Silobehälter führt.

14. Anlage nach einem der Ansprüche 5 bis 13, dadurch gekennzeichnet, daß die als Bioreaktoren dienenden Silobehälter (1) mit einer Wärmeisolierung ausgestattet sind.

15. Anlage nach einem der Ansprüche 5 bis 14, dadurch gekennzeichnet, daß jeder Silobehälter mit einer vorzugsweise im Bodenbereich vorgesehenen Heizvorrichtung ausgerüstet ist.

16. Anlage nach einem der Ansprüche 5 bis 15, dadurch gekennzeichnet, daß jeder Silobehälter mit einem Wärmetauscher für die Wärmerückgewinnung nach Beendigung eines Dekontaminierungsvorganges ausgerüstet ist.

17. Anlage nach einem der Ansprüche 5 bis 16, dadurch gekennzeichnet, daß den Silobehältern (1) die jeweiligen Betriebsbedingungen feststellende Sensoren zugeordnet sind, über die durch Regelung der Luft- und/oder der Biomassenzufuhr und/oder der Temperatur der Dekontaminierungsvorgang regelbar ist.

18. Anlage nach einem der Ansprüche 5 bis 17, dadurch gekennzeichnet, daß an die zentral an tiefster Stelle gelegene Entnahmeöffnung (3) eine Umwälzpumpe (22) angeschlossen ist, die über eine die Materialien zum oberen Bereich des Silos zurückführende Umwälzleitung (23) mit der Einführungsöffnung (2) des Silobehälters in Verbindung steht.

19. Anlage nach Anspruch 18, dadurch gekennzeichnet, daß die Umwälzpumpe (22) durch eine Exzenterschneckenpumpe gebildet ist, deren Wellenachse quer zur Siloachse ausgerichtet ist.

20. Anlage nach Anspruch 18 oder 19, dadurch gekennzeichnet, daß in die an der Außenwand des Silos entlanggeführte Umwälzleitung (23) ein Dreiwegeschieber (27) eingeschaltet ist.

## Claims

1. A method for decontamination of soil, silt, rubble or the like containing noxious materials, with the aid of micro-organisms which are supplied to the material to be cleaned by sprinkling, characterised in that the materials to be cleaned are introduced into a closable silo container and by means of a circulating device are subjected at least at time intervals to a vertical intermixing motion, wherein the sprinkling with micro-organisms occurs in the silo container.

2. A method according to claim 1, characterised in that the intermixing motion occurs with supply of oxygen or air.

3. A method according to claim 1 or 2, characterised in that the bio-mass is flushed out of the materials after the microbial treatment thereof and before the discharge thereof from the silo container (1).

4. A method according to one of claims 1 to 3, characterised in that the circulating motion serving the intermixing of the materials is undertaken with the aid of compressed air or hydraulics.

5. A plant for carrying out the method according to one of claims 1 to 4, characterised in that at least one silo container (1) serving as bio-reactor is provided for the acceptance and intermixing of the materials to be cleaned, which comprises a circulating device (8,9) as well as openings (2,3, 4-sic-) for the supply or discharge of the materials and on its upper side comprises a separate device (4) for introducing the bio-mass.

6. A plant according to claim 5, characterised in that the silo container (1) is connected to at least one oxygen supply line (12,13,14).

7. A plant according to claim 5 or 6, characterised in that each silo container (1) has a feed opening (2) serving the supply of material, and an emptying opening (3) serving the material discharge.

8. A plant according to one of claims 5 to 7, characterised in that connected to each silo container (1) there is an exhaust air line (5,6) leading the exhaust air sucked-off to an exhaust air filtering device.

9. A plant according to one of claims 5 to 8, characterised in that the circulating device provided in the silo container (1) comprises a conveying pipe (8) arranged concentrically in the approximately cylindrical standing silo container and arranged at a distance from the base, in the interior of which there is pivoted a driven lifting screw (9).

10. A plant according to claims 5 and 9, characterised in that the device (4) for introducing the bio-mass is designed in the form of a sprinkling device formed above the conveying pipe (8) containing the lifting screw (9).

11. A plant according to one of claims 5 to 10, characterised in that provided for several silo containers (1) there is a conveyor belt (17), common to them, delivering the materials to be cleaned to the feed openings (2), and/or a conveyor belt (20), common to them, discharging the cleaned materials from the emptying openings (3).

12. A plant according to claim 11, characterised in that allocated to each feed opening (2) there is a feeding funnel (18) as well as guiding walls (19) able to be swivelled above the conveyor belt (17), with the aid of which guiding walls the materials to be cleaned, in dependence on the respective swivel position of the guiding walls, are able to be discharged away from the conveyor belt (17) in the direction of the feed opening (2) allocated to the guiding wall.

13. A plant according to one of claims 5 to 12, characterised in that several silo containers (1) are allocated a common air supply line (12,13,14), which leads by way of controllable valves to the upper and/or lower region of the silo containers.

14. A plant according to one of claims 5 to 13, characterised in that the silo containers (1) serving as bio-reactors are equipped with heat insulation.

15. A plant according to one of claims 5 to 14, characterised in that each silo container is equipped with a heating device provided preferably in the base region.

16. A plant according to one of claims 5 to 15, characterised in that each silo container is equipped with a heat exchanger for the heat recovery once a decontamination process has terminated.

17. A plant according to one of claims 5 to 16, characterised in that allocated to the silo containers (1) there are sensors determining the respective operational conditions, by way of which by regulating the air and/or bio-mass supply and/or the temperature the decontamination process is able to be regulated.

18. A plant according to one of claims 5 to 17, characterised in that a circulating pump (22) is connected to the removal opening (3) lying centrally at the lowest point, which pump is connected, by way of a circulating line (23) leading the materials back to the upper region of the silo, to the inlet opening (2) of the silo container.

19. A plant according to claim 18, characterised in that the circulating pump (22) is formed by an eccentric worm pump, the shaft axis of which is aligned transverse to the silo axis.

20. A plant according to claim 18 or 19, characterised in that a three-way slide (27) is connected into the circulating line (23) led along the outer wall of the silo.

**Revendications**

1. Procédé pour décontaminer des sols, boues, gravats ou analogues, contenant des polluants, à l'aide de micro-organismes qui ont été ajoutés par arrosage à la matière à contaminer, caractérisé en ce que les matières à épurer sont introduites dans un réservoir silo susceptible d'être fermé et sont soumis au moins à des intervalles des temps à un mouvement de mélange vertical, à l'aide d'un dispositif de circulation, l'arrosage par les micro-organismes s'effectuant dans le réservoir silo.

2. Procédé selon la revendication 1, caractérisé en ce que le mouvement de mélange est réalisé en ajoutant de l'oxygène ou de l'air.

3. Procédé selon les revendications 1 ou 2, caractérisé en ce que la biomasse est évacuée des matières après leur préparation micro-biologique et avant leur évacuation du réservoir silo (1).

4. Procédé selon l'une des revendications 1 à 3, caractérisé en ce que le mouvement de circulation pour le mélange des matières est réalisé à l'aide de l'air sous pression ou par voie hydraulique.

5. Installation pour la mise en oeuvre du procédé selon l'une des revendications 1 à 4, caractérisée en ce qu'au moins un réservoir silo (1) servant de bio-réacteur est prévu pour la réception et le mélange des matières à épurer, qui comprend un dispositif de circulation (8, 9) ainsi que des ouvertures (2, 3, 4) pour l'introduction ou l'évacuation des matières, et, à sa surface supérieure, un dispositif séparé (4) pour l'introduction de la biomasse.

6. Installation selon la revendication 5, caractérisée en ce que le réservoir silo (1) est relié à au moins un conduit d'amené d'oxygène (12, 13, 14).

7. Installation selon la revendication 5 ou 6, caractérisée en ce que chaque réservoir silo (1) comprend une ouverture de chargement (2) pour l'introduction des matières et une ouverture d'évacuation (3) servant pour évacuer les matières.

8. Installation selon l'une des revendications 5 à 7, caractérisé en ce qu'à chaque réservoir silo (1) est raccordé un conduit d'évacuation d'air (5, 6) emmenant l'air évalué aspiré à un dispositif de filtration de l'air évacué.

9. Installation selon l'une des revendications 5 à 8, caractérisée en ce que le dispositif de circulation prévu dans le réservoir silo (1) comprend un tube de transport (8) sensiblement concentrique dans le réservoir silo cylindrique et disposé debout, et prévu à une certaine distance du sol, à l'intérieur du tube de transport étant montée rotative une hélice élévatrice (9) entraînée.

10. Installation selon la revendication 5 et 9, caractérisée en ce que le dispositif (4) pour l'introduction de la biomasse est réalisé sous forme d'un dispositif d'arrosage formé au-dessus du tube de transport (8) contenant l'hélice élévatrice (9).

11. Installation selon l'une des revendications 5 à 10, caractérisée en ce que pour plusieurs réservoirs silos (1) est prévue une bande de transport (17) commune à ces réservoirs et emmenant aux ouvertures d'introduction (2) les matières à épurer, et/ou une bande de transport (20) commune évacuant les matières épurées des ouvertures d'évacuation (3).

12. Installation selon la revendication 11, caractérisée en ce qu'à chaque ouverture de chargement ou d'introduction (2) est associé un entonnoir d'introduction (18) ainsi que des parois de guidage (19) pivotant, au-dessus de la bande de transport (17) et à l'aide desquels les matières à épurer peuvent être dégagées en fonction de la position de pivotement respective des parois de guidage, de la bande de transport (17) en direction de l'ouverture d'introduction (2) associée à la paroi de guidage.

13. Installation selon l'une des revendications 5 à 12, caractérisée en ce qu'à plusieurs réservoirs silo (1) est associé un conduit commun d'air amené (12, 13, 14) qui s'étend, par l'intermédiaire de soupapes susceptibles d'être commandées vers la zone supérieure et/ou inférieure des réservoirs silo.

14. Installation selon l'une des revendications 5 à 13, caractérisée en ce que les réservoirs silo (1) servant de bioréacteurs sont pourvus d'une isolation thermique.

15. Installation selon l'une des revendications 5 à 14, caractérisée en ce que chaque réservoir silo est équipé d'un dispositif de chauffage prévu de préférence dans la zone du fond.

16. Installation selon l'une des revendications 5 à 15, caractérisée en ce que chaque réservoir silo est équipé d'un échangeur de chaleur pour la récupération de la chaleur après la fin du processus de décontamination.

17. Installation selon l'une des revendications 5 à 16, caractérisée en ce qu'au réservoir silo (1) sont associés des capteurs déterminant les conditions de fonctionnement respectifs, par l'intermédiaire desquels le processus de décontamination est réglable par régulation de l'ajout de l'air et/ou des biomasses et/ou de la température.

18. Installation selon l'une des revendications 5 à 17, caractérisée en ce qu'à l'ouverture de l'évacuation (3) disposée de façon centrale à l'emplacement le plus bas est raccordée une pompe de circulation (22) qui communique avec l'ouverture d'introduction (2) du réservoir silo par un conduit de circulation (23) ramenant les matières à la zone supérieure du silo.

19. Installation selon la revendication 18, caractérisée en ce que la pompe de circulation (22) est formée par une pompe à hélice excentrique dont l'axe d'arbre est orienté perpendiculairement à l'axe du silo.

20. Installation selon la revendication 18 ou 19, caractérisée en ce qu'un tiroir à trois voies (27) est disposé dans le conduit de circulation (23) amené le long de la paroi extérieure du silo.

Fig.1

Fig. 2

Fig. 3